# EUROPÄISCHE PATENTSCHRIFT

(11) **EP 0 930 134 B1**
(45) Veröffentlichungstag und Bekanntmachung des Hinweises auf die Patenterteilung: **31.03.2004**
(21) Anmeldenummer: 99100563.8
(22) Anmeldetag: 13.01.1999
(51) Int. Cl.: B25H 1/20, A61C 13/12, B08B 15/02

(54) **Medizintechnischer oder dentaltechnischer Arbeitstisch**
Worktable for medicine or dentistry
Table pour travail technique médical ou dentaire

(30) Priorität: 15.01.1998 DE 19801316
(43) Veröffentlichungstag der Anmeldung: 21.07.1999
(73) Patentinhaber: Kaltenbach & Voigt GmbH & Co. KG, 88400 Biberach/Riss (DE)
(72) Erfinder: Buchmann, Siegfried, 88319 Aitrach (DE); Weiss, Günther, 88299 Leutkirch (DE)
(74) Vertreter: Schmidt-Evers, Jürgen, Dipl.-Ing.

(56) Entgegenhaltungen:
- EP-A- 0 093 257
- DE-A- 19 624 506

## Beschreibung

Die Erfindung bezieht sich auf einen medizintechnischen oder dentaltechnischen Arbeitstisch.

Ein solcher Arbeitstisch wird in einem medizintechnischen oder dentaltechnischen Labor oder auch in medizinischen oder dentalmedizinischen Praxen benutzt, um verschiedene Arbeiten handhabungsfreundlich und qualitativ durchführen zu können. Hierbei kann es sich z.B. um spanabhebende Bearbeitungsmaßnahmen an einem Werkstück oder Modell oder um Prüfmaßnahmen wie meßtechnische Maßnahmen oder optische Untersuchungen handeln.

Bei einem in der DE 196 24 506 A1 beschriebenen bekannten Arbeitstisch für ein medizinisches oder dentaltechnisches Labor ist eine haubenförmige Schutzvorrichtung mit einer vorderen Schutzscheibe aus durchsichtigem Material vorgesehen, die den Benutzer bei im Bereich der Schutzvorrichtung durchzuführenden spanabhebenden Bearbeitungen vor Verletzungen durch Bearbeitungsspäne oder auch vor der Verbreitung von bei der Bearbeitung entstehenden Stäuben schützen soll.

Die Fig. 2 dieser Druckschrift zeigt eine haubenförmige Schutzvorrichtung mit einer vorderen, durchsichtigen Schutzscheibe und einer hinteren Schutzwand, die beide am vorderen Ende eines sich von hinten nach vorne erstreckenden Tragarms gehalten sind.

Die Fig. 9 dieser Druckschrift zeigt einen medizin- oder dentaltechnischen Arbeitstisch, bei dem eine nur durch eine durchsichtige vordere Scheibe gebildete Schutzvorrichtung vorhanden ist, wobei die Scheibe in einer sich nach hinten schräg aufwärts erstreckenden Anordnung an ihrem unteren Kantenbereich an einem sich vom Arbeitstisch aufwärts erstreckenden Befestigungsschenkel befestigt ist. Diese Schutzvorrichtung übt rückseitig keine Schutzfunktion aus.

Der Erfindung liegt die Aufgabe zugrunde, einen medizintechnischen oder dentaltechnischen Arbeitstisch der eingangs angegebenen Art so auszugestalten, daß bei Gewährleistung einer einfachen Ausgestaltung und/oder Anordnung der Schutz der Schutzvorrichtung nach hinten erweitert wird.

Diese Aufgabe wird durch die Merkmale des Anspruchs 1 gelöst.

Beim erfindungsgemäßen Arbeitstisch weist die Schutzvorrichtung zusätzlich zur Schutzscheibe ein hinteres schutzwandförmiges Schutzvorrichtungsteil auf, das an seinem oberen Rand mit der Schutzscheibe eine haubenförmige Schutzvorrichtung bildet und mittelbar oder unmittelbar an der Schutzscheibe anliegt und dadurch deren Schutz sich nicht nur nach vorne, sondern wenigstens im oberen Teilbereich auch nach hinten erstreckt. Hierdurch wird auch der hintere Teil des Arbeitstisches wenigstens teilweise vor aus der Bearbeitung resultierenden Verschmutzungen geschützt. Dabei kann der hintere Schutzvorrichtungsteil auf dem Arbeitstisch positioniert sein, vorzugsweise so, daß er in stabiler Lage mit seinem oberen Rand an der Schutzscheibe anliegt und/oder er kann an einem Tragarm gehalten sein, vorzugsweise so, daß er in seinem oberen Randbereich an der Schutzscheibe anliegt, wodurch in beiden Fällen eine haubenförmige Bauweise gewährleistet ist. Im Rahmen der Erfindung kann jedoch der hintere Schutzvorrichtungsteil auch dann, wenn er an einem Tragarm gehalten ist, auf der Arbeitstischfläche aufstehen. Es ist auch möglich und vorteilhaft, einen Tragarm zu benutzen, der in jeder beliebigen Höhenlage positionierbar ist und stehen bleibt, so daß der hintere Schutzvorrichtungsteil auch in einer von der Arbeitstischfläche abgehobenen Position die haubenförmige Anordnung mit der Schutzscheibe zu erfüllen vermag. Zu diesem Zweck kann der Tragarm eine Gewichtsausgleichsvorrichtung aufweisen oder in der jeweiligen Verstellposition feststellbar sein.

Bei der erfindungsgemäßen Ausgestaltung ergänzen sich der vordere und hintere Schutzvorrichtungsteil zu einer gemeinsamen haubenförmigen Schutzvorrichtung, wobei der hintere Schutzvorrichtungsteil die Öffnung zum Einblicken und der vordere Schutzvorrichtungteil die Schutzscheibe zum Verschließen der Öffnung aufweist. Dabei zeichnen sich die erfindungsgemäßen Ausgestaltungen durch eine einfache Bauweise aus. Bei der Ausgestaltung nach Anspruch 1 ist dies dadurch vorgegeben, daß der hintere Schutzvorrichtungsteil ein separates Bauteil ist, das einfach und kostengünstig hergestellt werden kann, wobei seine Positionierung entweder durch Aufstehen auf der Arbeitstischfläche oder durch den Tragarm ebenfalls in einfacher Weise gewährleistet werden kann.

Aufgrund der einfachen Anordnung und Ausgestaltung lassen sich die erfindungsgemäßen Merkmale auch leicht und kostengünstig herstellen sowie der hintere Schutzvorrichtungsteil am Arbeitstisch montieren bzw. positionieren. Ein weiterer Vorteil der erfindungsgemäßen Ausgestaltung besteht darin, daß der hintere Schutzvorrichtungsteil handhabungsfreundlich und schnell in Arbeitsstellung bringbar und wieder entfernbar ist. Hierdurch läßt sich der Arbeitstisch einfach und schnell an unterschiedliche Arbeiten, z.B. Arbeiten unterschiedlicher Verschmutzungsgrade, anpassen, was der Einsetzbarkeit des Arbeitstisches förderlich ist.

In den Unteransprüchen sind Merkmale enthalten, die zu einfachen, kleinen, kostengünstig herstellbaren und sicheren Bauweisen führen, wobei diverse Merkmale auch ein Sammeln von Schmutzpartikeln im hinteren Schutzvorrichtungsteil ermöglichen und dadurch zur Sauberkeit des Arbeitstisches beitragen.

Nachfolgend werden die Erfindung und weitere durch sie erzielbare Vorteile anhand von Ausführungsbeispielen und Zeichnungen näher erläutert. Es zeigen
- Fig. 1: einen medizintechnischen oder dentaltechnischen Arbeitstisch in der Vorderansicht;
- Fig. 2: einen medizintechnischen oder dentaltechnischen Arbeitstisch mit einem sich von hinten nach vorne erstreckenden Tragarm für eine Schutzvorrichtung einer auf dem Arbeitstisch angeordneten Tragvorrichtung in der Seitenansicht;
- Fig. 3: die Schutzvorrichtung nach Fig. 2 in perspektivischer Draufsicht von vorne;
- Fig. 4: eine erfindungsgemäße Schutzvorrichtung in abgewandelter Ausgestaltung in perspektivischer Vorderansicht von oben;
- Fig. 5: einen hinteren Schutzvorrichtungsteil in der Vorderansicht;
- Fig. 6: den Schnitt VI-VI in Fig. 5.

Der allgemein mit 1 bezeichnete Arbeitstisch eignet sich insbesondere für dentaltechnische Zwecke, jedoch kann er auch für allgemeine medizintechnische Zwecke benutzt werden. Der Arbeitstisch 1 besteht aus einer Tischplatte 2 mit einer oberseitigen Tischfläche 2a und zwei seitlich von vorne nach hinten durchgehend angeordneten blockförmigen Tischbeinen 3, in denen frontseitig zugängliche Schubladen oder Schränke angeordnet sind und zwischen denen ein Freiraum 4 für die Beine der an der Bedienungsseite am Arbeitstisch 1 sitzenden Person (nicht dargestellt) vorhanden ist. Desweiteren weist der Arbeitstisch 1 mehrere Arbeitsvorrichtungen auf, von denen eine Arbeistsvorrichtung 5 vorzugsweise zwischen einer unter der Tischplatte 2 zurückgeschobenen Nichtsgebrauchsstellung und einer im vorderen Bereich auf der Tischplatte 2 vorgeschobenen Gebrauchsstellung in einer zugehörigen Führung 6 bewegbar ist. Hierbei handelt es sich um eine Absaugvorrichtung 7 mit einer nach hinten oder nach oben austretenden Absaugöffnung 8, in deren Bereich, hier dahinter, sich eine Arbeitsstelle 9 auf der Tischfläche 2a oder auf einer Bodenplatte der Arbeitsvorrichtung 5 oder der Absaugvorrichtung 7 befindet.

Der Arbeitsstelle 9 ist wenigstens eine weitere Arbeitsvorrichtung 5 in Form einer Schutzvorrichtung 11 zugeordnet, deren Zweck es ist, die Umgebung insbesondere vorderseitig und auch rückseitig vor im Arbeitsbetrieb von der Arbeitsstelle 9 ausgehenden Verunreinigungen zu schützen. Hierbei kann es sich um aus einer spanabhebenden Bearbeitung resultierende Späne oder Stäube handeln.

Die Schutzvorrichtung 11 besteht aus einem vorderen Schutzvorrichtungsteil 11a und einem hinteren Schutzvorrichtungsteil 11b. Der vordere Schutzvorrichtungsteil 11a weist eine durchsichtige ebene Frontscheibe 11c auf, die eine rechteckige oder quadratische Form hat und in ihrem unteren Randbereich an einem Halter 12 gehalten ist, der an der Tischplatte befestigt ist und eine aufrechte Befestigungswand 12a aufweist, an der die Frontscheibe 11c vorzugsweise lösbar befestigt ist, insbesondere in einer Steckfassung, die durch eine in der Ebene der Frontscheibe 11c angeordnete Nut 12b gebildet sein kann, in die die Frontscheibe 11c von oben mit einer gewissen Klemmspannung einsteckbar und dadurch gehalten ist.

Der hintere Schutzvorrichtungsteil 11b weist wenigstens eine Rückwand auf, die mit ihrem oberen, sich vorzugsweise gerade erstreckenden Rand an der Frontscheibe 11c insbesondere in deren oberen Bereich anliegt und dadurch mit der Frontscheibe 11c eine haubenförmige Schutzvorrichtung 11 bildet. Vorzugsweise erstreckt sich die Rückwand in der Arbeitsstellung des hinteren Schutzvorrichtungsteils 11b nach unten bis zur Tischfläche 2a.

Bei der vorliegenden Ausgestaltung ist die Schutzvorrichtung 11 kastenförmig ausgebildet, wobei der hintere Schutzvorrichtungsteil 11b und der vordere Schutzvorrichtungsteil 11a in Form der Frontscheibe 11c sich zu einer Kastenform ergänzen. Von der Rückwand 11d erstreckt sich gegebenenfalls eine horizontale Deckenwand 11e nach vorne, deren gerade und horizontale Vorderkante eine Öffnung 11f oberseitig begrenzt, die in einer sich nach hinten schräg aufwärts erstreckenden Öffnungsebene liegt. Von den Seitenkanten der Rückwand 11d erstrecken sich Seitenwände 11g nach vorne, die mit der Deckenwand 11e fest verbunden sind und deren obere Ränder ebenfalls nach hinten schräg aufwärts verlaufen und die Öffnung 11f in der Öffnungsebene begrenzen. Die Seitenwände 11g können sich bis zur vorderen Befestigungswand 12a erstrecken, so daß eine vordere Stirnwand nicht erforderlich ist, jedoch vorhanden sein kann. In den unteren vorderen Bereichen der Seitenwände 11g sind Durchgriffslöcher 11h angeordnet, die den Durchgriff mit den Händen der Bedienungsperson dienen und das Arbeiten im Bereich der die Schutzvorrichtung 11 bildenden Schutzhaube an der Arbeitsstelle 9 ermöglichen. Die Anordnung und Formgebung ist so getroffen, daß bei auf der Tischfläche 2a aufstehender Schutzhaube 13 die oberen Ränder der Seitenwände 11g sich in der Öffnungsebene befinden und somit die Schutzhaube 13 in einer nach vorne gegen die Frontscheibe 11c geschobenen Stellung die Frontscheibe 11c die Öffnung 11f abdeckt und verschließt.

Die Schutzvorrichtung 11 ist durch eine erste Verbindungsvorrichtung in Form einer Schnellkupplung 14a mit einem Tragarm 14 einer Tragvorrichtung 15 lösbar verbunden. Die Schnellkupplung 14a weist einen vorragenden Kupplungszapfen 14b und eine ihn aufnehmende Kupplungsausnehmung 14c auf, die eine Steckkupplung bilden und in der zusammengesteckten Stellung durch eine axiale Sicherungsvorrichtung, z.B. eine nicht dargestellte Verrastungsvorrichtung, aneinander gesichert sind.

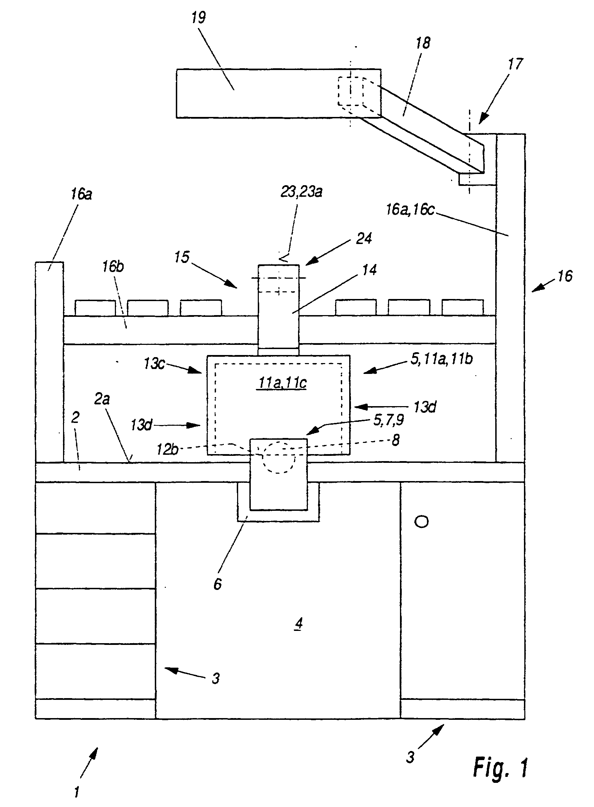

Die Tragvorrichtung 15 weist eine Tragsäule oder ein Traggestell auf, das im hinteren Bereich des Arbeitstisches 1, insbesondere auf diesem, befestigt ist und von diesem nach oben ragt. Bei der Ausgestaltung nach Fig. 1 ist ein viereckiger Tragrahmen 16 mit seitlichen Tragsäulen 16a und einer horizontalen Traverse 16b vorgesehen, von der der Tragarm 14 sich nach vorne erstreckt. An einer nach oben ragenden Verlängerung 16c z.B. der rechten Tragsäule 16a ist durch ein Gelenk 17 mit vertikaler Gelenkachse ein etwa horizontaler Tragarm 18 schwenkbar gelagert, der an seinem nach vorne ragenden freien Ende durch ein weiteres Gelenk mit vertikaler Gelenkachse mit einer Leuchte 19 für den Arbeitstisch 1 horizontal schwenkbar verbunden ist. Auf der Traverse 16b können Ablageplätze, z.B. Vorratsbehälter für Werkzeug oder zu montierende Teile angeordnet sein, die für die Arbeiten auf dem Arbeitstisch 1 benötigt werden.

Die angekuppelte Schutzvorrichtung 11 ist mit Hilfe des Tragarms 14 in ihrer Höhenlage und seitlich und quer zur Arbeitsseite 21 des Arbeitstisches 1 jeweils hin und her bewegbar und vorzugsweise in der jeweiligen Stellung feststellbar. Zur Höheneinstellung kann hierzu eine nicht dargestellte Gewichtsausgleichsvorrichtung dienen, oder die betroffenen Vertikalgelenke können feststellbar oder so schwer gängig sein, daß sie manuell überdrückbar sind, jedoch in der jeweiligen Stellung verharren. Der Beweglichkeit dienen ein Basisgelenk 23 mit vertikaler Gelenkachse 23a und ein Gelenk 24 mit horizontaler Gelenkachse.

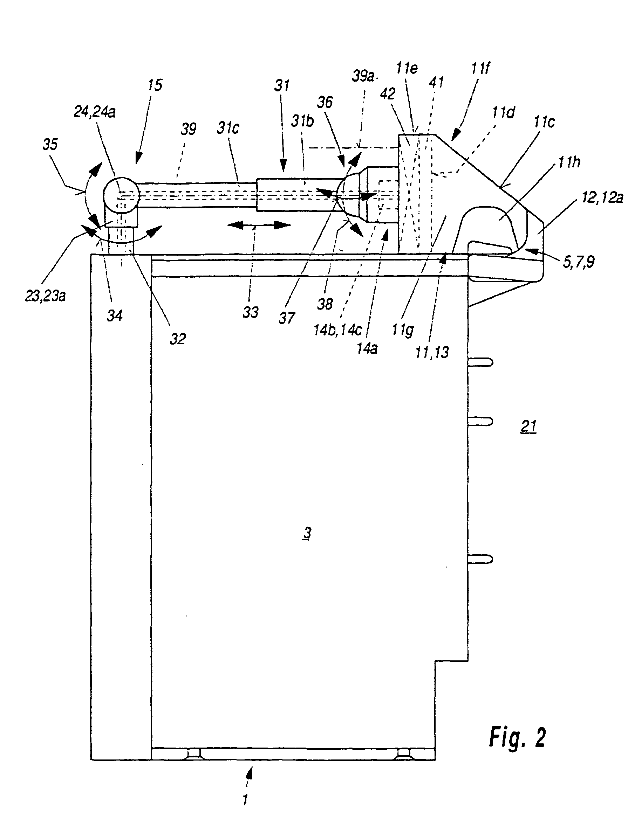

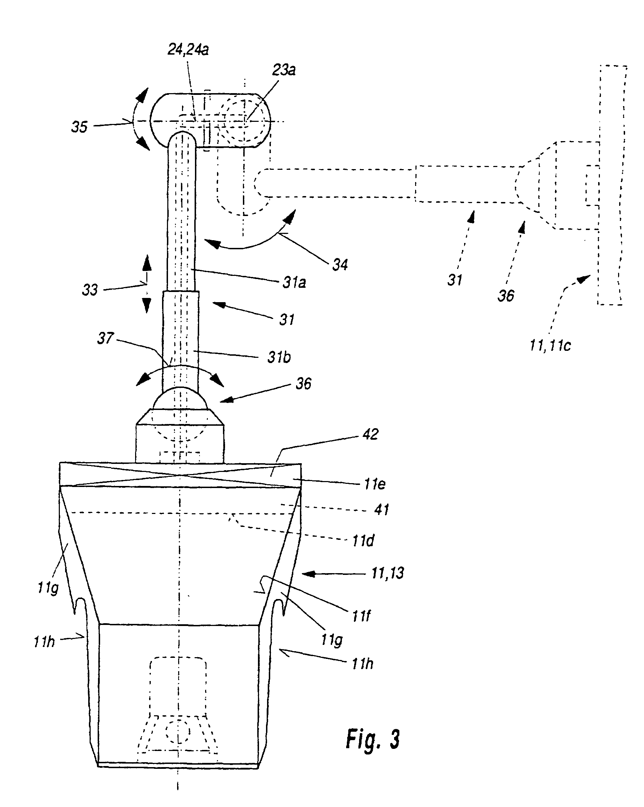

Das Ausführungsbeispiel nach Fig. 2 und 3, bei dem gleiche oder vergleichbare Teile mit gleichen Bezugszeichen versehen sind, unterscheidet sich von dem vorbeschriebenen Ausführungsbeispiel durch einen Tragarm 31 in abgewandelter Ausgestaltung und gegebenenfalls auch eine niedriger ausgebildete oder fehlende Tragvorrichtung 15. Letzteres kann z.B. dadurch verwirklicht sein, daß das Basisgelenk 23 direkt auf der Tischplatte 2 oder auf einem kleinen Sockel angeordnet ist. Der Tragarm 31 ist ein aus wenigstens zwei Tragarmteilen 31a, 31b bestehender Teleskoparm, der wahlweise manuell teleskopierbar ist und in seiner jeweiligen Teleskopstellung vorzugsweise durch eine nicht dargestellte Feststellvorrichtung feststellbar sein kann. Dieser Freiheitsgrad ist durch den Doppelpfeil 33 verdeutlicht. Weitere Freiheitsgrade sind durch die Doppelpfeile 34, 35 verdeutlicht, nämlich die freie Schwenkbarkeit um die vertikale Gelenkachse 23a und um die horizontale Schwenkachse 24a des Gelenks 24, das zwischen dem hinteren Teleskoparm 31a und dem oberen Gelenkteil des Gelenks 23 gebildet sein kann.

Im vorderen Bereich des Tragarms 31 ist ein besonderes Gelenk in Form eines allseitig begrenzt schwenkbaren Raum- oder Kugelgelenks 36 vorgesehen, das eine entsprechende Schwenkbarkeit des hinteren Schutzvorrichtungsteils 11b ermöglicht, die beim dargestellten Ausführungsbeispiel durch eine Absaughaube 13 gebildet sein kann. Das Raumgelenk 36 kann direkt zwischen der Schutzvorrichtung 11 und dem Tragarm 31 angeordnet sein. Bei der vorliegenden Ausgestaltung ist zwischen der Schutzvorrichtung 11 und dem Tragarm 31 die Schnellkupplung 14a angeordnet, wobei das Raumgelenk 36 zwischen dem dem Tragarm 31 zugehörigen Schnellkupplungsteil 14b und dem vorderen Tragarmteil 31b angeordnet ist. Es ist im Rahmen der Erfindung jedoch auch möglich, das Raumgelenk 36 zwischen der Schutzvorrichtung 11 und dem ihr zugeordneten Schnellkupplungsteil 14c oder zwischen zwei anderen Schutzvorrichtungsteilen anzuordnen. Die allseitig begrenzte Schwenkbarkeit des Raumgelenks 36 ist durch zwei Doppelpfeile 37, 38 verdeutlicht.

Es können eine oder mehrere Medienleitungen 39 außen am Tragarm 31 oder längs durch den Tragarm 31 verlaufend angeordnet sein, letzteres ist durch gestrichelte Linien andeutungsweise dargestellt. Bei einem Verlauf der wenigstens einen Mediumleitung 39 am Umfang des Tragarms 31 kann diese am vorderen Tragarmteil 31b gehalten sein, wobei der hintere Abschnitt der Mediumleitung sich frei erstrecken und beim Teleskopieren des vorderen Tragarmteils 31b frei folgen kann.

Fig. 3 zeigt den Tragarm 31 mit der Schutzvorrichtung 11 in einer seitlich nach hinten geschwenkten Bereitschafts- oder Parkstellung. Sowohl in dieser Stellung als auch in seiner Arbeitsstellung kann die Schutzvorrichtung 11 auf der Tischplatte 2 aufliegen. Sofern eine Feststellbarkeit der Schutzvorrichtung 11 bezüglich des Tragarms 31 oder des Tragarms 31 im Gelenk 24 gewünscht ist bzw. sind, ist dem jeweiligen Gelenk 24 eine Feststellvorrichtung zuzuordnen, die ein Feststellen des Gelenks in der eingestellten Stellung ermöglicht. Dies kann z.B. durch eine Schwergängigkeit des betreffenden Gelenks erreicht werden, die so groß ist, daß eine manuelle Verstellung gewährleistet ist, jedoch eine unbeabsichtigte Verstellung verhindert ist. Letzteres gilt auch für die Teleskopierbarkeit insbesondere dann, wenn entweder in nach oben geschwenkten Schrägstellungen des Tragarms 31 oder bei einem höheren Sockel 32 in nach unten geschwenkten Schrägstellungen ein selbsttätiges Ein- oder Ausschieben des Tragarms 31 verhindert sein soll. Auch in diesem Fall kann die Feststellvorrichtung durch eine Schwergängigkeit zwischen den Teleskopteilen gebildet sein.

Bei den vorbeschriebenen Ausführungsbeispielen ist in den Fällen. in denen die Schutzvorrichtung 11 durch eine Absaughaube gebildet ist, der Arbeitstisch 1 mit einer an den Hohlraum der Schutzhaube 13e angeschlossenen Absaugleitung 39a beschrieben. die sich von der Absaughaube zu einer nicht dargestellten Saugvorrichtung im Bereich des Arbeitstisches oder zu einer zentralen Absaugvorrichtung erstreckt, an die die Absaugleitungen mehrerer Arbeitstische angeschlossen sein können. In diesen Fällen ist der Einzel-Absaugvorrichtung oder der zentralen Absaugvorrichtung jeweils eine Filtervorrichtung mit einem Filter zum Filtern von abgesaugten Partikeln oder Verunreinigungen zugeordnet.

Im Rahmen der Erfindung ist es jedoch auch möglich, ein Filter 41 oder ein Filter 41 und eine Saugvorrichtung 42 an der Absaughaube anzuordnen, insbesondere in deren hinterem oder oberem Bereich, wie es die Fig. 2 sowie 3 zeigen. Hierbei ist in Absaugrichtung zunächst der Filter 41 und dahinterliegend die Saugvorrichtung 42, z.B. ein Ventilator, im hinteren oder oberen Bereich der Absaughaube angeordnet. Bei dieser Ausgestaltung erfüllt die zugehörige Medienleitung nicht die Funktion einer Absaugleitung sondern einer Abführungsleitung für die im Bereich der Absaughaube eingesaugte Abluft.

Im Rahmen der Erfindung ist es auch möglich, die Abführungsleitung an einer neben dem Tragarm 31, z.B. über bei dem Tragarm 31, an einem Medienleitungsanschluß 39a an die Absaughaube anzuschließen.

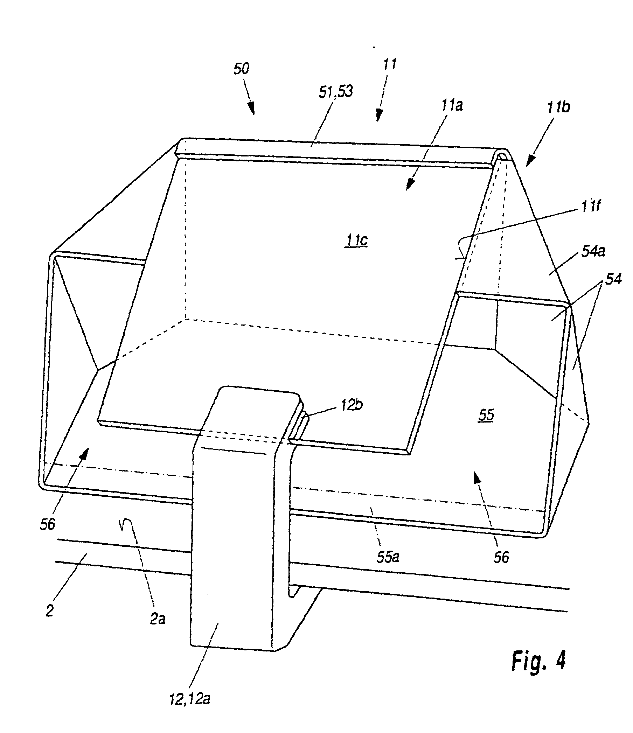

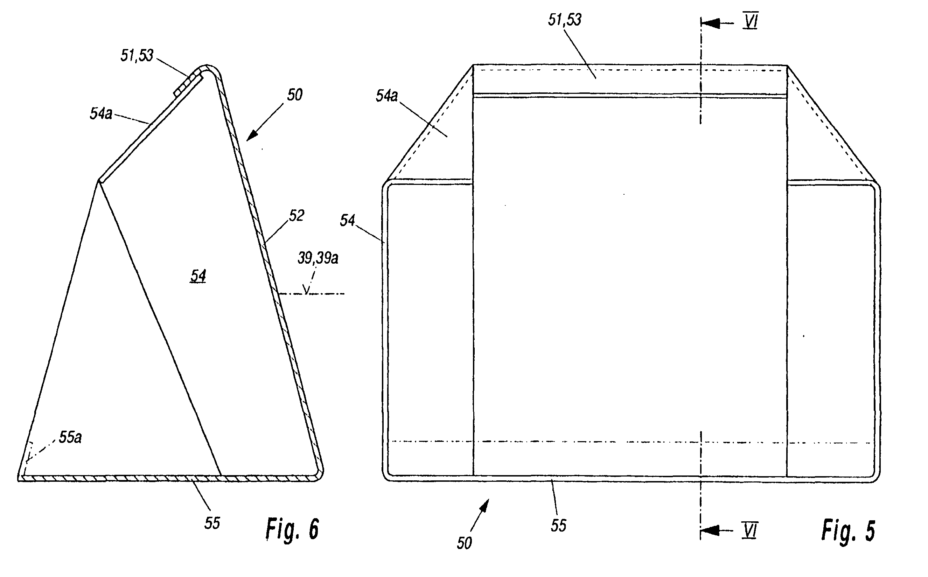

Beim Ausführungsbeispiel nach Fig. 4 bis 6, bei dem gleiche oder vergleichbare Teile mit gleichen Bezugszeichen versehen sind, ist das hintere Schutzvorrichtungsteil 11b an seinem oberen Ende mit einem Aufhängteil 51 versehen, dem es den oberen Rand der Frontscheibe 11c von hinten nach vorne oder seitlich übergreifend aufgehängt ist. Bei der vorliegenden Ausgestaltung weist das hintere Schutzvorrichtungsteil 11b eine etwa vertikale Rückwand 52 auf, von deren oberen Rand sich in einem spitzen Winkel, der der Schräglage der Frontscheibe 11c entspricht, ein Übergreifschenkel 53 sich nach vorne und unten erstreckt. Von der Rückwand 52 können sich Seitenwände 54 nach vorne, hier bis zur Frontscheibe 11c, erstrecken, die den zwischen der Rückwand 52 und der Frontscheibe 11c vorhandenen Zwickel zumindest im oberen Bereich ausfüllen. Der Abstand der Seitenwände 54 voneinander ist mit einem geringen Bewegungsspiel breiter bemessen, als die Frontscheibe 11c, so daß der soweit beschriebene Schutzvorrichtungsteil 11b im Sinne einer Steckverbindung auf den oberen Rand der Frontscheibe 11c aufsteckbar ist.

Von der Unterkante der Rückwand 52 kann sich eine Bodenwand 55 nach vorne erstrecken, die vorzugsweise mit den Seintenwänden 54 kastenförmig verbunden ist. Zur Vergrößerung des Hohlraums des so bebildeten Schutzteils oder Schutzkastens kann die Rückwand 52 schräg verlaufen oder insbesondere im unteren Bereich nach hinten ausgebaucht sein. In vergleichbarer Weise können auch die Seitenwände 54 wenigstens im unteren Bereich seitlich ausgebaucht sein. Gegebenenfalls können der seitlichen Verlängerung des Schutzkastens 50 dienende Deckenwandabschnitte 54a in oder parallel zur Schutzscheibe 11c angeordnet sein. Ausreichend große Durchgriffsräume 56 für die Hände der Bedienungsperson zu beiden Seiten des Halters 12 sind dadurch gewährleistet, das die Seitenwände 54 sich von der Rückwand 52 nur über einen Teilbereich der Schutzscheibe 11c nach vorne erstrecken. Die seitlichen Ausbauchungen der Rück- und Seitenwände tragen zu einer Vergrößerung der Durchgriffräume 56 und zu einem handhabungsfreundlichen Zugang zur Arbeitsstelle 9 bei.

Aufgrund des Vorhandenseins der Bodenwand 55 bildet dieser Schutzkasten einen Sammelbehälter für Späne und Staub, wobei der von der Arbeitsstelle rückwärtig und auch seitlich gelegene Bereich des Arbeitstisches vor Verunreinigungen geschützt ist. insbesondere dann. wenn dieses Schutzteil rückseitig oder oberseitig an eine Mediumleitung oder Abführungsleitung einer Saugvorrichtung angeschlossen ist. Zur Vergrößerung des Fassungsvermögens des Schutzkastens 50 kann am vorderen Rand der Bodenwand 55 ein aufrechter Frontwandschenkel 55a angeordnet sein. Zwecks schneller und handhabungsfreundlicher Montage bzw. Demontage des hinteren Schutzbvorrichtungsteils 11b ist es vorteilhaft, den Anschluß 39a für die Medium- oder Abführungsleitung als Schnellkupplung auszubilden.

Im Rahmen der Erfindung können die Schutzhaube 13 und/oder das Schutzteil bzw. der Schutzkasten 50 teilweise oder vollständig aus klar durchsichtigem Material bestehen, insbesondere aus Kunststoff, wobei es sich vorzugsweise um ein einstückig hergestelltes Spritzgußteil handeln kann.

Im Rahmen der Erfindung ist es auch möglich, die Schutzhaube 13 oder Absaughaube nach Fig. 2 und 3 mit einem Aufhängteil 51 auszubilden und am oberen Randbereich der Schutzscheibe 11c aufzuhängen, wobei der Tragarm 31 nicht erforderlich ist.

## Patentansprüche

1. Medizintechnischer oder dentaltechnischer Arbeitstisch (1), der in seinem vorderen Bereich seiner Tischfläche (2a) eine Schutzvorrichtung (11) mit einer an seiner Arbeitsseite (21) angeordneten Schutzscheibe (11c) in sich nach oben erstreckender Anordnung aufweist, die durch einen Halter (12) am Arbeitstisch (1) gehalten ist, wobei ein hinterer Schutzvorrichtungsteil (11b) mit einer Rückwand (11d) hinter der Schutzscheibe (11c) vorgesehen ist, der mit der Schutzscheibe (11c) eine haubenförmige Schutzvorrichtung (11) bildet,
wobei der hintere Schutzvorrichtungsteil (11b) ein separates Bauteil ist und in einer Position, in der er in stabiler Lage auf dem Arbeitstisch (1) steht oder an einem Tragarm (14; 31) gehalten ist, in eine Arbeitsstellung bringbar und positionierbar sowie wieder entfernbar ist, in der er in seinem oberen Randbereich an der Schutzscheibe (11c) anliegt.

2. Medizintechnischer oder dentaltechnischer Arbeitstisch nach Anspruch 1,
**dadurch gekennzeichnet,**
**dass** der hintere Schutzvorrichtungsteil (11b) eine oberseitige Öffnung (11f) aufweist, die in einer sich parallel zur Schutzscheibe (11c) erstreckenden Ebene angeordnet ist und deren Öffnungsrand in der Arbeitsstellung der Schutzscheibe (11c) benachbart ist oder daran anliegt.

3. Medizintechnischer oder dentaltechnischer Arbeitstisch nach Anspruch 1 oder 2,
**dadurch gekennzeichnet,**
**dass** der hintere Schutzvorrichtungsteil (11b) eine Rückwand (11d;52) aufweist, die sich in der Arbeitsstellung des Schutzvorrichtungsteils (11b) nach unten vorzugsweise bis zur Tischfläche (2a) erstreckt.

4. Medizintechnischer oder dentaltechnischer Arbeitstisch nach Anspruch 3,
**dadurch gekennzeichnet,**
**dass** sich von der Rückwand (11d;52) eine Deckenwand (11e) und/oder Seitenwände (11g;54) nach vorne erstrecken, wobei der obere Rand der Rückwand (11d;52) oder der vordere Rand der Deckenwand (11e) und die oberen Ränder der Seitenwände (11g) die Öffnung (11f) bilden.

5. Medizintechnischer oder dentaltechnischer Arbeitstisch nach einem der vorherigen Ansprüche,
**dadurch gekennzeichnet,**
**dass** der hintere Schutzvorrichtungsteil (11b) mit seiner Rückwand (52) an einem seitlich und in der Höhe verstellbaren Tragarm (14; 31) gehalten ist.

6. Medizintechnischer oder dentaltechnischer Arbeitstisch nach Anspruch 5,
**dadurch gekennzeichnet,**
**dass** der Tragarm (31) teleskopierbar ist.

7. Medizintechnischer oder dentaltechnischer nach Anspruch 5 oder 6,
**dadurch gekennzeichnet,**
**dass** der Tragarm (14; 31) in jeder Stellung positionierbar ist.

8. Medizintechnischer oder dentaltechnischer Arbeitstisch nach einem der Ansprüche 5 bis 7,
**dadurch gekennzeichnet,**
**dass** der hintere Schutzvorrichtungsteil (11b) in einem allseitig beweglichen Gelenk (36) gelagert ist.

9. Medizintechnischer oder dentaltechnischer Arbeitstisch nach Anspruch 8,
**dadurch gekennzeichnet,**
**dass** das Gelenk (36) in seiner jeweiligen Gelenkstellung feststellbar oder manuell drückbar positioniert ist.

10. Medizintechnischer oder dentaltechnischer Arbeitstisch nach Anspruch 8 oder 9,
**dadurch gekennzeichnet,**
**dass** die Seitenwände (54) nur über einen Teilbereich der Schutzscheibe (11c) vorragen und/oder im unteren Bereich Durchgriffslöcher (11h) aufweisen.

11. Medizintechnischer oder dentaltechnischer Arbeitstisch nach einem der
vorherigen Ansprüche,
**dadurch gekennzeichnet,**
**dass** der hintere oder obere Bereich des hinteren Schutzvorrichtungsteils (11c) mit der Saugleitung (39) oder Abführungsleitung einer Absaugvorrichtung verbunden ist.

12. Medizintechnischer oder dentaltechnischer Arbeitstisch nach Anspruch 11,
**dadurch gekennzeichnet,**
**dass** der hintere oder obere Bereich des hinteren Schutzvorrichtungsteils (11c) durch eine Schnellkupplung mit der Saugleitung (39) oder Abführungsleitung verbunden ist.

13. Medizintechnischer oder dentaltechnischer Arbeitstisch nach einem der vorherigen Ansprüche,
**dadurch gekennzeichnet,**
**dass** im hinteren oder oberen Bereich des hinteren Schutzvorrichtungsteils (11c) eine Saugvorrichtung (42) angeordnet ist, die mit einer Abführungsleitung verbunden ist.

14. Medizintechnischer oder dentaltechnischer Arbeitstisch nach Anspruch 13,
**dadurch gekennzeichnet,**
**dass** der Saugvorrichtung (42) ein Filter (41) vorgeordnet ist.

15. Medizintechnischer oder dentaltechnischer Arbeitstisch nach Anspruch 14,
**dadurch gekennzeichnet,**
**dass** der Filter (41) austauschbar ist.

## Claims

1. Medical-technical or dental-technical work table (1), which has in its forward region of its table surface (2a) a protection arrangement (11) having a protection plate (11c) arranged on its work side (21) in upwardly extending arrangement, which plate is held on the work table by means of a holder (12), there being provided a rearward protection arrangement part (11b) having a rear wall (11d) behind the protection plate (11c), which forms with the protection plate (11c) a hood-shaped protection arrangement (11),
the rearward protection arrangement part (11b) being a separate component and, in a position in which it stands in a stable disposition on the work table (1) or is held at a carrier arm (14; 31), can be brought and positioned to a working position, and is again removable, in which in its upper edge region it bears on the protection plate (11c).

2. Medical-technical or dental-technical work table according to claim 1,
**characterised in that**,
the rearward protection arrangement part (11b) has an upper opening (11f) which is arranged in a plane extending parallel to the protection plate (11c) and the opening edge of which, in the working position, neighbours the protection plate (11c) or bears thereon.

3. Medical-technical or dental-technical work table according to claim 1 or 2,
**characterised in that**,
the rearward protection arrangement part (11b) has a rear wall (11d; 52) which, in the working position of the protection arrangement part (11b), extends downwardly preferably to the table surface (2a).

4. Medical-technical or dental-technical work table according to claim 3,
**characterised in that**,
a cover wall (11e) and/or side walls (11g; 54) extend forwardly from the rear wall (11d; 52), whereby the upper edge of the rear wall (11d; 52) or the forward edge of the cover wall (11e) and upper edges of the side walls (11g) form the opening (11f).

5. Medical-technical or dental-technical work table according to any preceding claim,
**characterised in that**,
the rearward protection arrangement part (11b) is held with its rear wall (52) on a carrier arm (14, 31) which is adjustable laterally and in height.

6. Medical-technical or dental-technical work table according to claim 5,
**characterised in that**,
the carrier arm (14; 31) is telescopable.

7. Medical-technical or dental-technical work table according to claim 5 or 6,
**characterised in that**,
the carrier arm (14; 31) is positionable in each disposition.

8. Medical-technical or dental-technical work table according to any of claims 5 to 7,
**characterised in that**,
the rearward protection arrangement part (11b) is mounted in a joint (36) moveable in all directions.

9. Medical-technical or dental-technical work table according to claim 8,
**characterised in that**,
the joint (36) is fixable in its respective joint position or can be positioned with manual force.

10. Medical-technical or dental-technical work table according to claim 8 or 9,
**characterised in that**,
the side walls (54) project forward only over a partial region of the protection plate (11c) and/or have access holes (11h) in the lower region.

11. Medical-technical or dental-technical work table according to any preceding claim,
**characterised in that**,
the rearward or upper region of the rearward protection arrangement part (11c) is connected with the suction line (39) or discharge line of a suction device.

12. Medical-technical or dental-technical work table according to claim 11,
**characterised in that**,
the rearward or upper region of the rearward protection arrangement part (11c) is connected with the suction line (39) or discharge line by means of a quick coupling.

13. Medical-technical or dental-technical work table according to any preceding claim,
**characterised in that**,
there is arranged in the rearward or upper region of the rearward protection arrangement part (11c) a suction device (42) which is connected with a discharge line.

14. Medical-technical or dental-technical work table according to claim 13,
**characterised in that**,
a filter (41) is arranged upstream of the suction device (42).

15. Medical-technical or dental-technical work table according to claim 14,
**characterised in that**,
the filter (41) is exchangeable.

## Revendications

1. Table de travail technique médico-dentaire (1) qui, dans sa zone avant de sa surface de table (2a), présente un dispositif de protection (11) avec une vitre de protection (11c) disposée sur son côté de travail (21) dans un agencement s'étendant vers le haut, laquelle est assujettie à la table de travail (1) par un support (12), tandis qu'une partie arrière du dispositif de protection (11b) est dotée d'une paroi postérieure (11d) derrière la vitre de protection (11c) et forme avec la vitre de protection (11c) un dispositif de protection (11) en forme de hotte,
de sorte que la partie arrière du dispositif de protection (11b) constitue une partie de construction séparée et, dans une situation où elle est stabilisée sur la table de travail (1) ou maintenue sur un bras de support (14;31), elle pourra être amenée et placée sur une position de travail ainsi qu'en être à nouveau enlevée, et se trouver en appui dans sa zone marginale supérieure sur la vitre de protection (11c).

2. Table de travail technique médico-dentaire selon la revendication 1,
**caractérisée en ce que**,
la partie arrière du dispositif de protection (11b) présente une ouverture (11f) sur le côté supérieur qui est disposée dans un plan s'étendant parallèlement à la vitre de protection (11c) et dont le bord d'ouverture dans la position de travail est contigu à ou vient en appui sur la vitre de protection (11c).

3. Table de travail technique médico-dentaire selon la revendication 1 ou 2,
**caractérisée en ce que**,
la partie arrière du dispositif de protection (11b) présente une paroi postérieure (11d;52) qui, dans la position de travail de la partie du dispositif de protection (11b) s'étend vers le bas, de préférence jusqu'à la surface de la table (2a).

4. Table de travail technique médico-dentaire selon la revendication 3,
**caractérisée en ce que**,
à partir de la paroi postérieure (11d;52), une paroi de recouvrement (11e) et/ou des parois latérales (11g;54) s'étendent vers l'avant, tandis que le bord supérieur de la paroi postérieure (11d;52) ou le bord avant de la paroi de recouvrement (11c) et les bords supérieurs des parois latérales (11g) forment l'ouverture (11f).

5. Table de travail technique médico-dentaire selon l'une des revendications précédentes,
**caractérisée en ce que**,
la partie arrière du dispositif de protection (11b) avec sa paroi postérieure (52) est maintenue sur un bras de support (14;31) réglable latéralement et en hauteur.

6. Table de travail technique médico-dentaire selon la revendication 5,
**caractérisée en ce que**,
le bras de support (31) est télescopique.

7. Table de travail technique médico-dentaire selon la revendication 5 ou 6,
**caractérisée en ce que**,
le bras de support (14;31) est orientable dans toute position.

8. Table de travail technique médico-dentaire selon l'une des revendications 5 à 7,
**caractérisée en ce que**,
la partie arrière du dispositif de protection (11b) est montée dans une articulation (36) mobile de manière omnidirectionnelle.

9. Table de travail technique médico-dentaire selon la revendication 8,
**caractérisée en ce que**,
l'articulation (36) peut être fixée dans sa position articulée respective ou être positionnée manuellement par pression.

10. Table de travail technique médico-dentaire selon la revendication 8 ou 9,
**caractérisée en ce que**,
les parois latérales (54) ne sont en surplomb que sur une zone partielle de la vitre de protection (11c) et/ou présentent des évidements d'accès ou de préhension (11h).

11. Table de travail technique médico-dentaire selon l'une des revendications précédentes,
**caractérisée en ce que**,
la zone postérieure ou supérieure de la partie arrière du dispositif de protection (11c) est raccordée à la conduite aspirante (39) ou conduite d'évacuation d'un dispositif d'aspiration.

12. Table de travail technique médico-dentaire selon la revendication 11,
**caractérisée en ce que**,
la zone postérieure ou supérieure de la partie arrière du dispositif de protection (11c) est raccordée par un accouplement rapide à la conduite d'aspiration (39) ou conduite d'évacuation.

13. Table de travail technique médico-dentaire selon l'une des revendications précédentes,
**caractérisée en ce que**,
dans la zone postérieure ou supérieure de la partie arrière du dispositif de protection (11c) est agencé un dispositif d'aspiration (42) qui est raccordé à une conduite d'évacuation.

14. Table de travail technique médico-dentaire selon la revendication 13,
**caractérisée en ce que**,
un filtre (41) est disposé en amont du dispositif d'aspiration (42).

15. Table de travail technique médico-dentaire selon la revendication 14,
**caractérisée en ce que**,
le filtre (41) est interchangeable.
